# EUROPÄISCHE PATENTSCHRIFT

(11) **EP 4 298 363 B1**
(45) Veröffentlichungstag und Bekanntmachung des Hinweises auf die Patenterteilung: **29.07.2026**
(21) Anmeldenummer: 22703384.2
(22) Anmeldetag: 03.02.2022
(51) Int. Cl.: F16H 57/04, F03D 15/00, F03D 80/70

(54) **GETRIEBE UND VERFAHREN ZUM BETRIEB EINES GETRIEBES**
TRANSMISSION AND METHOD FOR OPERATING A TRANSMISSION
TRANSMISSION ET PROCÉDÉ D'ACTIONNEMENT DE TRANSMISSION

(30) Priorität: 26.02.2021 DE 102021201875
(43) Veröffentlichungstag der Anmeldung: 03.01.2024
(73) Patentinhaber: Flender GmbH, 46395 Bocholt (DE)
(72) Erfinder: BRÖCKER, Sarah, 46395 Bocholt (DE); DEGELING, Markus, 46414 Rhede (DE); KÖNIG, Christian, 44805 Bochum (DE)
(74) Vertreter: Michalski Hüttermann & Partner mbB
(86) Internationale Anmeldenummer: PCT/EP2022/052520
(87) Internationale Veröffentlichungsnummer: WO 2022/179818

(56) Entgegenhaltungen:
- WO-A2-2011/055384
- DE-A1- 102015 223 669
- DE-A1- 102019 207 102
- US-A1- 2015 104 127
- US-A1- 2017 299 044

## Beschreibung

Die Erfindung betrifft ein Getriebe bzw. ein Verfahren zum Betrieb eines Getriebes. Das Getriebe ist insbesondere an eine elektrische Maschine gekoppelt. Die elektrische Maschine ist ein Motor oder ein Generator. Das Getriebe befindet sich beispielsweise in einem Großmaschinenantriebstrang für eine Windkraftanlage oder eine Mühle für z.B. Erze oder Zement.

Durch eine höhere Systemintegration der Windkraftgetriebe mit dem Generator steigen die Anforderungen bezüglich der Dichtigkeit des Getriebes. Besonders kritisch ist beispielsweise die Abdichtung des Pitchrohres zum Generator, da hier austretendes Öl den Generator beschädigen kann.

Bei üblichen Getriebekonstruktionen ist ein axialer Raum zwischen jeder Sonne und dem nächsten rotorseitigen Bauteil. In diesen Raum wird Quetschöl aus den Eingriffen der Laufverzahnungen gedrückt, und läuft axial über das Pitchrohr, aufgrund der Getriebeneigung, Richtung Generator.

Bei integrierten Konzepten kann die radiale Lagerung des Pitchrohres im Generator erfolgen. Hierbei entfällt die Abschirmwirkung des Lagers auf dem Pitchrohr und das Quetschöl aus den Laufverzahnungen der Planetenstufen wird direkt vor die Dichtung zum Generator geführt.

Die Achse von Pitchrohr und Generator ist bei nicht integrierten Konzepten nicht koaxial. Hierbei wird das Pitchrohr im Getriebegehäuse gelagert. Nebenbei übernimmt das Lager hier die Funktion der Ölabschirmung. Das Pitchrohr wird z.B. durch eine einfache Labyrinthdichtung nach außen abgedichtet.

Aus der EP 2 541 058 B1 ist ein Antriebssystem bekannt, das eine zumindest eine Planetenradstufe umfassende Getriebeeinheit aufweist. Dabei weist die Planetenradstufe ein Hohlrad, mehrere Planetenräder, einen Planetenträger und ein Sonnenrad auf. Innerhalb einer Abtriebswelle und einer Rotorhohlwelle ist ein Pitch-Rohr angeordnet, das sich axial über das gesamte Antriebssystem erstreckt.

Aus DE 10 2015 223 669 A1 ist ein Dichtungskonzept für eine Drehdurchführung eines Getriebes einer Windkraftanlage bekannt, bei der ein Abdeckelement an einem Planetenträger einer Planetenradstufe angeordnet ist.

Aus US 2017/299044 A1 ist ein Differentialgetriebe für ein Kraftfahrzeug bekannt, bei dem eine Welle eines Kegelrads durch eine Hülse hindurchgeführt ist und die Hülse einen nach radial außen abstehenden Abweiser aufweist, um ankommendes Schmieröl auf zwei die Welle lagernde Lager zu verteilen.

Aus US 2015/104127 A1 ist ein Stirnradgetriebe bekannt, bei dem eine Welle durch eine mit einem kegeligen Abweiser verbundene Hülse hindurchgeführt ist, wobei der Abweiser Schmieröl in einem Ölraum zurückhält.

Aus WO 2011/055384 A2 ist ein Planetengetriebe mit einer ein Sonnenrad durchdringenden Trägerwelle eines Planetenträgers bekannt, wobei die Trägerwelle einen Entlüftungskanal und einen mit der Trägerwelle befestigten konischen Abweiser aufweist, wobei der Abweiser ein Eindringen von Schmieröl in einen radial verlaufenden Zwischenraum des Entlüftungskanals verhindern soll.

Aus DE 10 2019 207 102 A1, die den Oberbegriff des Anspruchs 1 bildet, ist ein Vertikalgetriebe für eine Windkraftanlage bekannt, bei dem aus einer Passverzahnung zwischen einer Sonnenwelle und einem Sonnenrad einer Planetenstufe abtropfender Schmierstoff in eine Auffangwanne fällt und über eine zu einem Pitch-Rohr beabstandeten Ablauf abgeleitet wird.

Eine Aufgabe der Erfindung ist es ein Schutzsystem zur Abweisung von Quetschöl zum Pitchrohr anzugeben.

Die Lösung der Aufgabe erfolgt durch ein Getriebe mit den Merkmalen des Anspruchs 1, einer Verwendung mit den Merkmalen des Anspruchs 11 sowie ein Verfahren mit den Merkmalen des Anspruchs 12. Bevorzugte Ausgestaltungen sind in den Unteransprüchen und der nachfolgenden Beschreibung angegeben, die jeweils einzeln oder in Kombination einen Aspekt der Erfindung darstellen können, wobei der Schutzbereich durch die Ansprüche definiert ist. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Getriebe für eine Windkraftanlage, mit zumindest einer ersten Getriebestufe, wobei das Getriebe eine Durchführung aufweist, wobei ein erster Abweiser zum Abweisen eines Schmiermittels von der Durchführung vorgesehen ist, wobei die erste Getriebestufe ein Planetengetriebe aufweist und die Durchführung ein Pitchrohr ist, wobei der erste Abweiser fest mit einem Sonnenrad verbunden ist.

Das Getriebe ist insbesondere im Wesentlichen horizontal ausgerichtet. Das Getriebe ist für eine Windkraftanlage vorgesehen. In der designierten Einbaulage kann das im Wesentlichen horizontal ausgerichtete Getriebe geringfügig, das heißt um ca. 2° bis 15°, insbesondere 3° bis 10°, besonders bevorzugt 4° bis 5°, zur Horizontalen angeschrägt ausgerichtet sein. Der mindestens eine Abweiser ist dazu hergerichtet, Schmiermittel, insbesondere Quetschöl, davon abzuhalten zur Durchführung zu gelangen. Der Abweiser kann hierzu zumindest mit einem Teil des Abweisers in einem sich ergebenen Weg zwischen einer Austrittsstelle des Schmiermittels und der Durchführung angeordnet sein. Ohne den Abweiser könnte Schmiermittel aufgrund einer leichten Schrägstellung des Getriebes zur Horizontalen von der Austrittsstelle des Schmiermittels in Schwerkraftrichtung auf die Durchführung tropfen. Da der Abweiser in Schwerkraftrichtung zwischen der Austrittsstelle des Schmiermittels und der Durchführung vorgesehen sein kann, kann das schwerkraftgetrieben abtropfende Schmiermittel von dem Abweiser aufgefangen und abgeführt werden. Hierbei wird die Erkenntnis ausgenutzt, dass bei einer leichten Schrägstellung des Getriebes, wie dies insbesondere bei einem Einsatz in einer Windkraftanlage der Fall ist, im Gegensatz zu einer rein horizontalen Ausrichtung des Getriebes die Oberflächenspannung des Schmiermittels nicht ausreichend sein kann, damit das Schmiermittel durch die Oberflächenspannung verursachte Adhäsionskräfte an den Komponenten der Austrittsstelle haften bleibt und dort abgeführt werden kann und stattdessen schwerkraftgetrieben sich ablösen und abtropfen kann. Im Gegensatz zu einem rein vertikal ausgerichteten Getriebe, tropft das Schmiermittel auch nicht an der Durchführung vorbei, sondern würde aufgrund des zur Ausrichtung der Durchführung angeschrägten Schwerkraftrichtung ohne Abweiser, der das verhindert, an der Durchführung auftreffen.

Insbesondere ist ein zweiter Abweiser zum Abweisen des Schmiermittels von der Durchführung vorgesehen. Der erste Abweiser und der zweite Abweiser sind vorzugsweise an unterschiedlichen axialen Enden des Getriebes und/oder an unterschiedlichen axialen Enden der mindestens einen Getriebestufe des Getriebes vorgesehen. Besonders bevorzugt ist der erste Abweiser an einem ersten Ende der Durchführung und der zweite Abweiser an einem von dem ersten Ende in axialer Richtung wegweisenden zweiten Ende der Durchführung vorgesehen. Dadurch kann vermieden werden, dass Schmiermittel an den in den axialen Enden vorgesehenen Öffnungen der Durchführung eindringen kann.

Vorzugsweise ist der erste Abweiser und/oder der zweite Abweiser an einer Endseite des Getriebes und/oder einer Endseite einer Getriebestufe des Getriebes angeordnet.

In einer Ausgestaltung des Getriebes weist das Getriebe mindestens eine zweite Getriebestufe auf, wobei der erste Abweiser und/oder der zweite Abweiser zum Abweisen von Schmiermittel zwischen der ersten Getriebestufe und der zweiten Getriebestufe vorgesehen ist.

In einer Ausgestaltung des Getriebes ist der zweite Abweiser fest mit einem Sonnenrad verbunden.

In einer Ausgestaltung des Getriebes der erste Abweiser und/oder der zweite Abweiser eine Kreisbogenform auf.

In einer Ausgestaltung des Getriebes weist der erste Abweiser und/oder der zweite Abweiser eine Rinne auf.

In einer Ausgestaltung des Getriebes weist der erste Abweiser und/oder der zweite Abweiser einen Ausgleich für eine Neigung des Getriebes auf.

In einer Ausgestaltung des Getriebes ragt der erste Abweiser und/oder der zweite Abweiser in eine kreisförmige Ausnehmung, wobei der zumindest eine Abweiser und die kreisförmige Ausnehmung zueinander rotierbar angeordnet sind.

In einer Ausgestaltung des Getriebes weist das Getriebe insbesondere einen Ölsumpf auf.

In einer Ausgestaltung des Getriebes weist der erste Abweiser und/oder der zweite Abweiser ein elektrisch isolierendes Material aufweist.

Die Erfindung betrifft ferner eine Verwendung eines Getriebes, das wie vorstehend beschrieben aus- und weitergebildet sein kann, in einer zu einer Hauptdrehachse des Getriebes um 2° bis 15° angeschrägten Einbaulage, insbesondere in einer Windkraftanlage. Unter einer Hauptdrehachse wir eine der Axialrichtung entsprechende Drehachse des Getriebes, insbesondere eine Drehachse einer mit einem Sonnenrad verbundenen Sonnenradwelle, verstanden.

Die Erfindung betrifft ferner eine Windkraftanlage mit einem zur Horizontalen um 2° bis 15° angeschrägt montierten Getriebe, das wie vorstehend beschrieben aus- und weitergebildet sein kann. Die Windkraftanlage kann wie vorstehend anhand des Getriebes erläutert aus- und weitergebildet sein.

Die Erfindung betrifft ferner ein Verfahren zum Betrieb eines Getriebes, das wie vorstehend beschrieben aus- und weitergebildet sein kann, wobei der erste Abweiser und/oder der zweite Abweiser Schmiermittel von der Durchführung abweist. Das Verfahren kann wie vorstehend anhand des Getriebes erläutert aus- und weitergebildet sein.

Bei einer Ausgestaltung des Verfahrens ist das Schmiermittel Quetschöl.

Bei einer Ausgestaltung des Verfahrens wird vom Abweiser abgewiesenes Schmiermittel in einen Ölsumpf geführt.

In einer Ausgestaltung des Getriebes ist eine Lagerung des Pitchrohres im Getriebe möglich. Das Pitchrohr ist eine Durchführung. Weiterhin ergeben sich keine weiteren Dichtigkeitsanforderungen.

Bei einer Ausgestaltung des Verfahrens wird das Getriebe mit einer elektrischen Maschine verbunden, wobei die Durchführung vom Schmiermittel freigehalten wird.

Die vorliegende Erfindung wird nachfolgend beispielhaft anhand von Zeichnung näher erläutert. Es zeigen:
- Figur 1: ein Getriebe in einer Schnittdarstellung,
- Figur 2: ein weiteres Getriebe in einer Schnittdarstellung

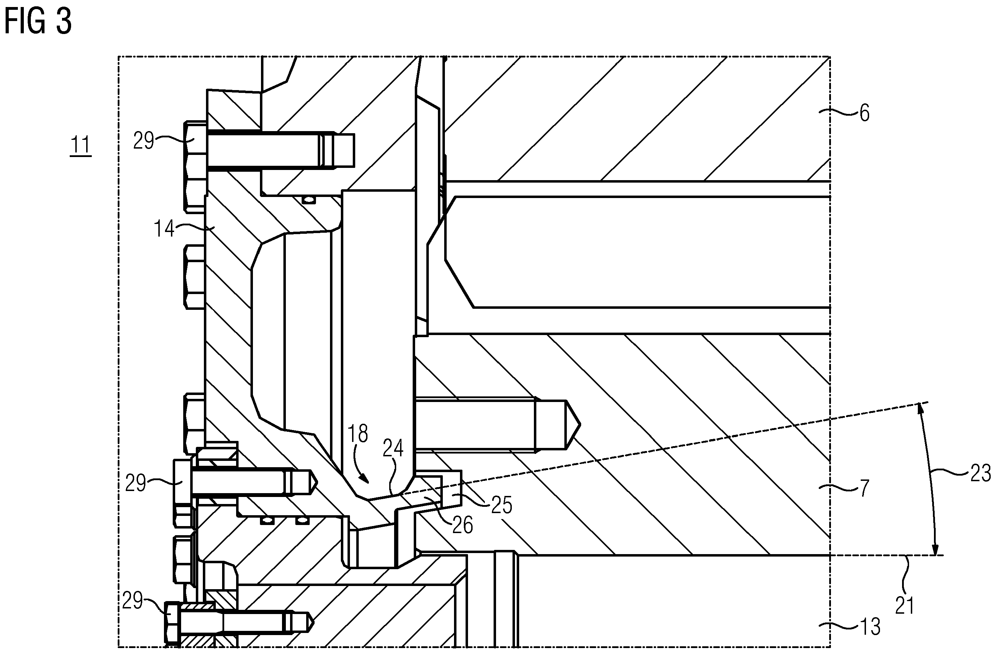

- Figur 3: einen Ausschnitt des weiteren Getriebes
- Figur 4: einen weiteren Ausschnitt des weiteren Getriebes und
- Figur 5: einen dritten Ausschnitt des weiteren Getriebes.

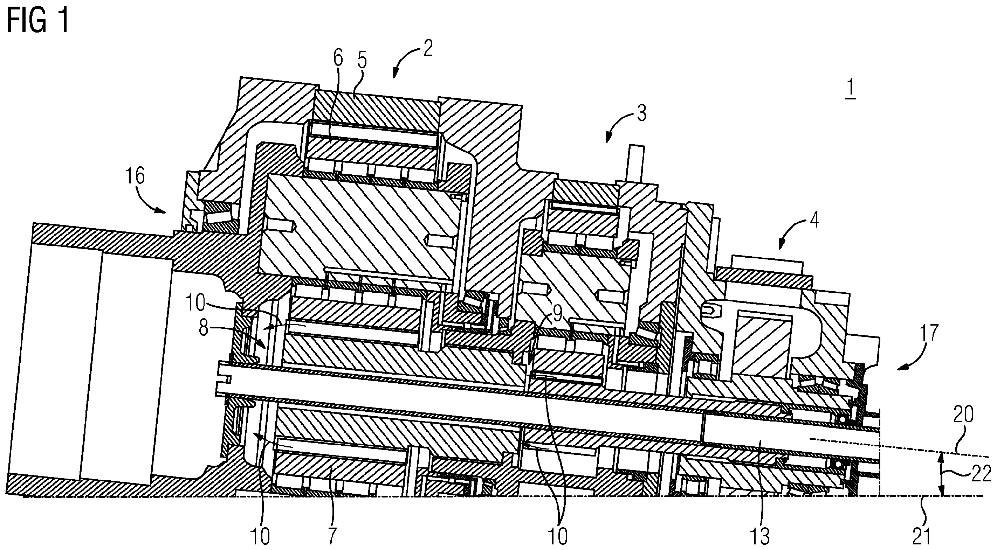

Die Darstellung nach Figur 1 zeigt ein Getriebe 1 mit Getriebestufen 2, 3 und 4. Das Getriebe 1 weist Endseiten 16 und 17 auf. Durch das Getriebe 1 führt eine Durchführung 13, auch Pitchrohr genannt. Die Achse 20 des Pitchrohres weist eine Neigung 22 zu einer Waagerechten 21 auf. Die Getriebestufen 2 weisen ein Hohlrad 5, Umlaufräder 6 und Sonnenräder 7 auf. Es gibt Hohlräume, einen axialen Raum LSS 8 und einen axialen Raum IMS 9. In diese Räume tritt Quetschöl, was durch Pfeile 10 angezeigt ist.

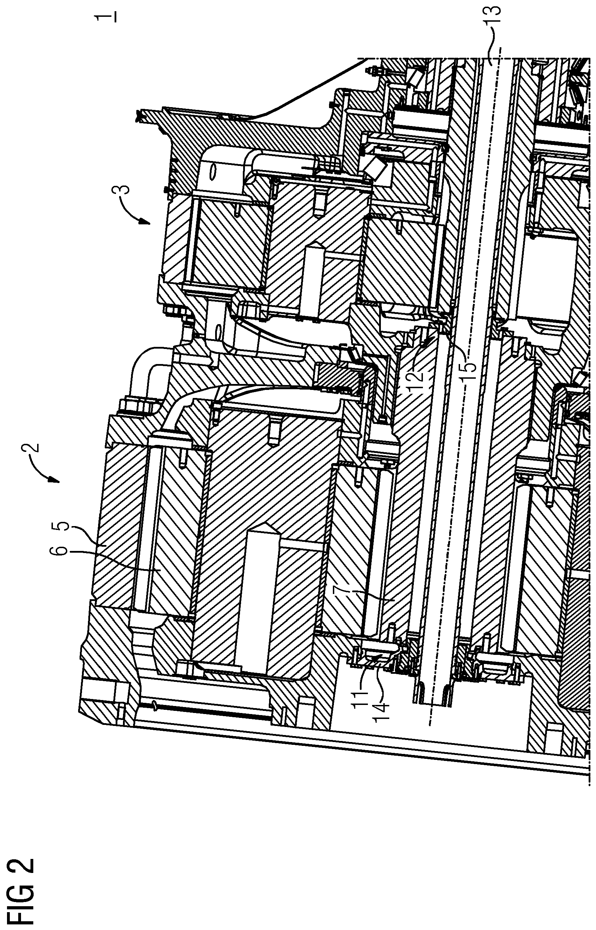

Die Darstellung nach Figur 2 zeigt ein weiteres Getriebe mit Getriebestufen 2 und 3, wobei hier ein erstes Abschirmsystem 11 und ein zweites Abschirmsystem 12 vorgesehen sind. Die Abschirmsysteme weisen Abweiser 14 und 15 auf. Die Abweiser weisen Quetschöl ab. Damit ist es möglich, dass das Pitchrohr frei von Quetschöl bleibt. Es ergibt sich ein integriertes Schutzsystem zur Abweisung von Quetschöl zum Pitchrohr. Bei diesem System gibt es insbesondere eine radial umlaufende Ölabweisung zwischen jeder Sonne und dem nächsten rotorseitigen Bauteil. Diese Abschirmung reduziert den freien Raum vor der Laufverzahnung. Somit wird der Großteil des Öls direkt in den Ölsumpf abgeleitet. Die Abschirmung ist so gestaltet, dass eine axiale Überdeckung mit der Sonne, oder dem nächsten axial gelegenen Bauteil erfolgt. Hierdurch kann das Öl nicht direkt auf das Pitchrohr gelangen. Die Abschirmung kann an die Sonne, an das nächste Bauteil angeschraubt werden, oder geometrischer Bestandteil des Bauteiles bzw. der Sonne sein. Eine mehrfache Abschirmung auf unterschiedlichen Durchmessern ist möglich.

Die Darstellung nach Figur drei zeigt einen Ausschnitt des weiteren Getriebes. Der Abweiser 14 ist mit Schrauben 29 befestigt. Der Abweiser 14 weist eine Rinne 18 mit einem schrägen Rinnengrund 24 auf. Damit kann beispielsweise eine Schräge Aufstellung des Getriebes ausgeglichen werden. Der Rinnengrund 24 weist eine Neigung 23 zur Waagerechten 21 auf.

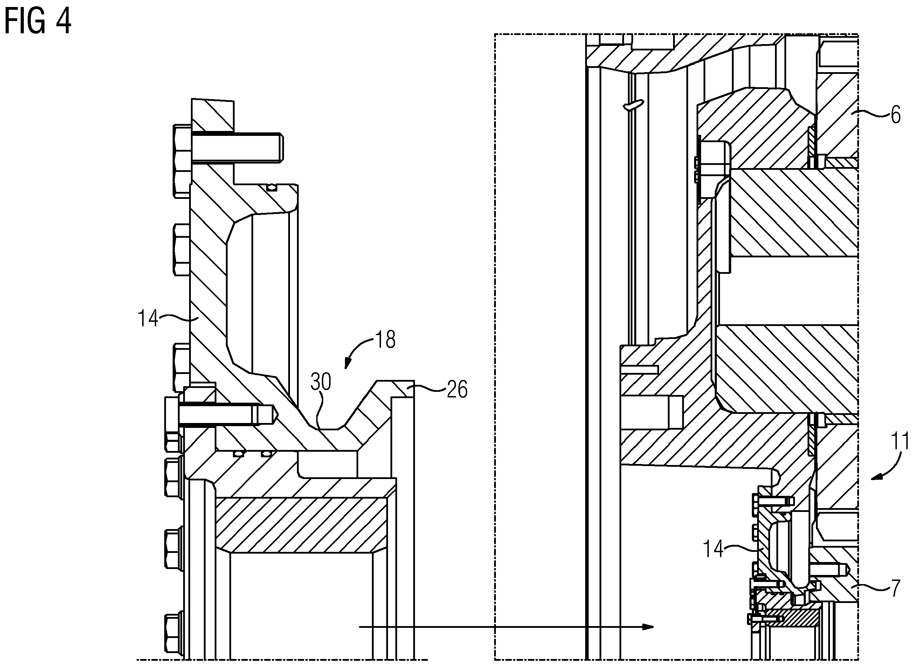

Die Darstellung nach Figur 4 weist eine weitere Detaildarstellung des Abweisers 14 auf. Wobei hier beispielhaft ein etwas waagerechter Rinnengrund gezeigt ist.

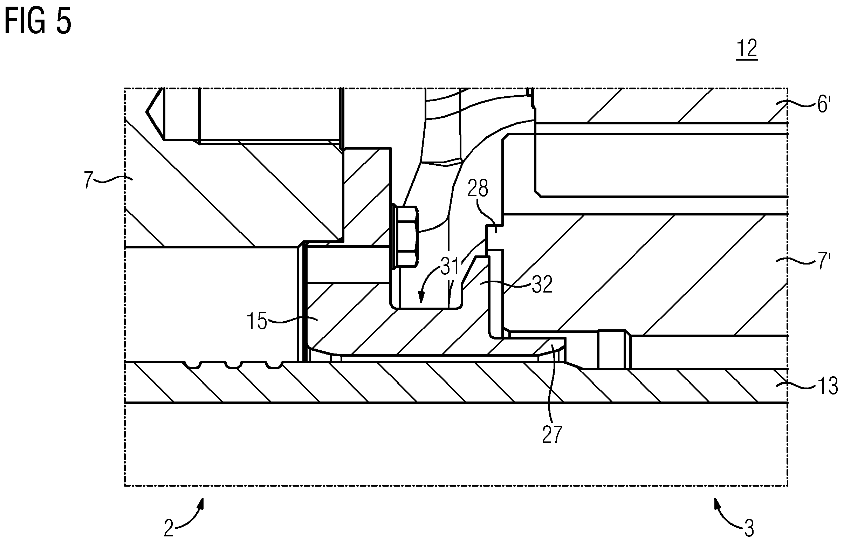

Die Darstellung nach Figur 5 zeigt ein weiteres Detail des weiteren Getriebes. Dargestellt ist ein zweites Abschirmsystem, welches sich in einem Bereich zwischen dem Sonnenrad 7 und dem Sonnenrad 7' befindet. Auch hier kann sich Öl in einer Rinne 31 sammeln. Die Rinne befindet sich in einem Abweiser 15. Der Abweiser 15 weist einen Kranz 27 auf, der zwischen das Sonnenrad 7' und das Pitchrohr 13 ragt. Der Abweiser 15 weist auch einen Kranz 32 auf, welcher sich zumindest teilweise unter einen Überhang 28 des Sonnenrades 7' befindet. So kann Quetschöl vom Sonnenrad 7' über den Überhang 28 und den Kranz 28 in die Rinne 31 abgleiten.

## Patentansprüche

1. Getriebe (1) mit zumindest einer ersten Getriebestufe (2,3,4), wobei das Getriebe (1) eine Durchführung (13) aufweist, wobei ein erster Abweiser (14) zum Abweisen eines Schmiermittels von der Durchführung (13) vorgesehen ist, wobei das Getriebe für eine Windkraftanlage vorgesehen ist, die erste Getriebestufe (2,3,4) ein Planetengetriebe aufweist und die Durchführung (13) ein Pitchrohr ist
**dadurch gekennzeichnet, dass**
der erste Abweiser (14) fest mit einem Sonnenrad (7) verbunden ist.

2. Getriebe (1) nach Anspruch 1, wobei ein zweiter Abweiser (15) zum Abweisen des Schmiermittels von der Durchführung (13) vorgesehen ist.

3. Getriebe (1) nach Anspruch 1 oder 2, wobei der erste Abweiser (14) und/oder der zweite Abweiser (15) an einer Endseite des Getriebes (1) angeordnet ist.

4. Getriebe (1) nach einem der Ansprüche 1 bis 3, wobei das Getriebe (1) mindestens eine zweite Getriebestufe (2,3,4) aufweist, wobei der erste Abweiser (14) und/oder der zweite Abweiser (15) zum Abweisen von Schmiermittel zwischen der ersten Getriebestufe (2) und der zweiten Getriebestufe (3) vorgesehen ist.

5. Getriebe (1) nach einem der Ansprüche 2 bis 4, wobei der zweite Abweiser (15) fest mit einem Sonnenrad (7) verbunden ist.

6. Getriebe (1) nach einem der Ansprüche 1 bis 5, wobei der erste Abweiser (14) und/oder der zweite Abweiser (15) eine Kreisbogenform aufweist.

7. Getriebe (1) nach einem der Ansprüche 1 bis 6, wobei der erste Abweiser (14) und/oder der zweite Abweiser (15) eine Rinne (18,19) aufweist.

8. Getriebe (1) nach einem der Ansprüche 1 bis 7, wobei der erste Abweiser (14) und/oder der zweite Abweiser (15) in eine kreisbogenförmige Ausnehmung ragt, wobei der zumindest eine Abweiser (14,15) und die kreisförmige Ausnehmung zueinander rotierbar angeordnet sind.

9. Getriebe (1) nach einem der Ansprüche 1 bis 8, wobei das Getriebe (1) einen Ölsumpf aufweist.

10. Getriebe (1) nach einem der Ansprüche 1 bis 9, wobei der erste Abweiser (14) und/oder der zweite Abweiser (15) ein elektrisch isolierendes Material aufweist.

11. Verwendung eines Getriebes (1) nach einem der Ansprüche 1 bis 10 in einer zu einer Hauptdrehachse des Getriebes (1) um 2° bis 15° angeschrägten Einbaulage in einer Windkraftanlage.

12. Verfahren zum Betrieb eines Getriebes (1) nach einem der Ansprüche 1 bis 10, wobei der erste Abweiser (14) oder der erste Abweiser (14) und der zweite Abweiser (15) Schmiermittel von der Durchführung (13) abweist.

13. Verfahren nach Anspruch 12, wobei von dem ersten Abweiser (14) und/oder von dem zweiten Abweiser (15) abgewiesenes Schmiermittel in einen Ölsumpf geführt wird.

14. Verfahren nach Anspruch 12 oder 13, wobei das Getriebe (1) mit einer elektrischen Maschine verbunden wird, wobei die Durchführung (13) vom Schmiermittel freigehalten wird.

## Claims

1. Transmission (1) having at least one first transmission stage (2, 3, 4), wherein the transmission (1) has a feedthrough (13), wherein a first deflector (14) is provided for deflecting a lubricant away from the feedthrough (13), wherein the transmission is provided for a wind turbine, the first transmission stage (2, 3, 4) has a planetary transmission, and the feedthrough (13) is a pitch tube,
**characterized in that**
the first deflector (14) is connected fixedly to a sun gear (7).

2. Transmission (1) according to Claim 1, wherein a second deflector (15) is provided for deflecting the lubricant away from the feedthrough (13).

3. Transmission (1) according to Claim 1 or 2, wherein the first deflector (14) and/or the second deflector (15) is/are arranged on an end side of the transmission (1).

4. Transmission (1) according to one of Claims 1 to 3, wherein the transmission (1) has at least one second transmission stage (2, 3, 4), wherein the first deflector (14) and/or the second deflector (15) is/are provided for deflecting lubricant between the first transmission stage (2) and the second transmission stage (3).

5. Transmission (1) according to one of Claims 2 to 4, wherein the second deflector (15) is connected fixedly to a sun gear (7).

6. Transmission (1) according to one of Claims 1 to 5, wherein the first deflector (14) and/or the second deflector (15) has/have a circular arc shape.

7. Transmission (1) according to one of Claims 1 to 6, wherein the first deflector (14) and/or the second deflector (15) has/have a channel (18, 19).

8. Transmission (1) according to one of Claims 1 to 7, wherein the first deflector (14) and/or the second deflector (15) projects/project into a circular-arc-shaped recess, wherein the at least one deflector (14, 15) and the circular recess are arranged rotatably with respect to each other.

9. Transmission (1) according to one of Claims 1 to 8, wherein the transmission (1) has an oil sump.

10. Transmission (1) according to one of Claims 1 to 9, wherein the first deflector (14) and/or the second deflector (15) has/have an electrically insulating material.

11. Use of a transmission (1) according to one of Claims 1 to 10 in an installation position in a wind turbine that is inclined by 2° to 15° with respect to a main axis of rotation of the transmission (1).

12. Method for operating a transmission (1) according to one of Claims 1 to 10, wherein the first deflector (14) or the first deflector (14) and the second deflector (15) deflects/deflect lubricant away from the feedthrough (13).

13. Method according to Claim 12, wherein lubricant deflected by the first deflector (14) and/or by the second deflector (15) is conducted into an oil sump.

14. Method according to Claim 12 or 13, wherein the transmission (1) is connected to an electric machine, wherein the feedthrough (13) is kept free from the lubricant.

## Revendications

1. Engrenage (1) comportant au moins un premier étage d'engrenage (2, 3, 4), l'engrenage (1) présentant un passage (13), un premier déflecteur (14) étant prévu pour dévier un lubrifiant du passage (13), l'engrenage étant prévu pour une éolienne, le premier étage d'engrenage (2, 3, 4) présentant un engrenage planétaire et le passage (13) étant un tube de calage,
**caractérisé en ce que**
le premier déflecteur (14) étant fixé de manière solidaire à une roue solaire (7).

2. Engrenage (1) selon la revendication 1, un deuxième déflecteur (15) étant prévu pour dévier le lubrifiant du passage (13).

3. Engrenage (1) selon la revendication 1 ou 2, le premier déflecteur (14) et/ou le deuxième déflecteur (15) étant disposé sur un côté d'extrémité de l'engrenage (1).

4. Engrenage (1) selon l'une quelconque des revendications 1 à 3, l'engrenage (1) comportant au moins un deuxième étage d'engrenage (2, 3, 4), le premier déflecteur (14) et/ou le deuxième déflecteur (15) étant prévu pour dévier du lubrifiant entre le premier étage d'engrenage (2) et le deuxième étage d'engrenage (3).

5. Engrenage (1) selon l'une quelconque des revendications 2 à 4, le deuxième déflecteur (15) étant fixé de manière solidaire à une roue solaire (7).

6. Engrenage (1) selon l'une quelconque des revendications 1 à 5, le premier déflecteur (14) et/ou le deuxième déflecteur (15) présentant une forme en arc de cercle.

7. Engrenage (1) selon l'une quelconque des revendications 1 à 6, le premier déflecteur (14) et/ou le deuxième déflecteur (15) présentant une gouttière (18, 19).

8. Engrenage (1) selon l'une quelconque des revendications 1 à 7, le premier déflecteur (14) et/ou le deuxième déflecteur (15) s'étendant dans un évidement en forme d'arc de cercle, l'au moins un déflecteur (14, 15) et l'évidement circulaire étant disposés de manière à pouvoir tourner l'un par rapport à l'autre.

9. Engrenage (1) selon l'une quelconque des revendications 1 à 8, l'engrenage (1) présentant un carter d'huile.

10. Engrenage (1) selon l'une quelconque des revendications 1 à 9, le premier déflecteur (14) et/ou le deuxième déflecteur (15) comportant un matériau électriquement isolant.

11. Utilisation d'un engrenage (1) selon l'une quelconque des revendications 1 à 10 dans une position de montage inclinée de 2° à 15° par rapport à un axe de rotation principal de l'engrenage (1), dans une éolienne.

12. Procédé de fonctionnement d'un engrenage (1) selon l'une quelconque des revendications 1 à 10, le premier déflecteur (14) ou le premier déflecteur (14) et le deuxième déflecteur (15) déviant du lubrifiant du passage (13).

13. Procédé selon la revendication 12, le lubrifiant dévié par le premier déflecteur (14) et/ou par le deuxième déflecteur (15) étant dirigé vers un carter d'huile.

14. Procédé selon la revendication 12 ou 13, l'engrenage (1) étant relié à une machine électrique, le passage (13) étant maintenu exempt de lubrifiant.
